# EUROPEAN PATENT APPLICATION

(11) **EP 4 303 888 A1**
(43) Date of publication of application: **10.01.2024**
(21) Application number: 22183532.5
(22) Date of filing: 07.07.2022
(51) Int. Cl.: G21K 1/00

(54) **THREE-DIMENSIONAL ION TRAP**

(71) Applicant: Infineon Technologies Austria AG, 9500 Villach (AT)
(72) Inventor: AUCHTER, Silke, 9500 Villach (AT); ROESSLER, Clemens, 9500 Villach (AT); SCHUEPPERT, Klemens Karl Heinrich, 9500 Villach (AT); ZESAR, Alexander, 9500 Villach (AT)
(74) Representative: Lambsdorff & Lange Patentanwälte Partnerschaft mbB

(57) **Abstract**

A device (100) for controlling trapped ions (180) includes a first substrate (120). The device further includes a second substrate (140) spaced apart from the first substrate. At least one ion trap is configured to trap an ion in a space between the first substrate and the second substrate. DC electrodes (122) of the ion trap are formed on the first substrate. RF electrodes (142) of the ion trap are formed on the second substrate and not on the first substrate.

## Description

### Technical Field

This disclosure relates generally to the field of ion traps, and in particular to ion traps for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Quantum computers require numerous qubits to outperform the computational power of classical supercomputers. Typically, more than 100 or even 1000 qubits will be required, depending on the problem. Further, the number of ions used for each qubit will in future be raised to about 6 to 100 ions in order to allow for more efficient error-correction during quantum computing. So far, however, the most advanced ion trap experiments can only fully entangle up to 24 qubits in laboratory experiments or control about 50 qubits individually.

A scalable design for several thousand ions with individual control will require complex ion trap designs that include multiple radio frequency (RF) and very many direct current (DC) electrodes. The required RF electrodes must be placed very close to each other between the DC electrodes for a suitable grid of ions.

First, for ion trap scaling it is crucial to provide for a lowest possible capacitance of the RF electrodes. High RF capacitance is the biggest obstacle to ion trap scaling. This is because high RF capacitance causes high charging currents, which can be several amperes. These in turn cause a high voltage drop, which makes it increasingly difficult to drive the RF electrodes.

Second, a dense electrode design leads to DC-RF crosstalk due to the coupling capacitances between RF electrodes and adjacent DC electrodes. This parasitic capacitance produces an RF electric field at the position of the ion by crosstalk to the DC electrodes, and thus enhanced micromotion and heating of the ion.

Thus, it can be summarized that current state-of-the-art ion traps are limited either in achievable confinement potential or in complexity (scalability).

### Summary

According to an aspect of the disclosure, a device for controlling trapped ions includes a first substrate. The device further includes a second substrate spaced apart from the first substrate. At least one ion trap is configured to trap an ion in a space between the first substrate and the second substrate. DC electrodes of the ion trap are formed on the first substrate. RF electrodes of the ion trap are formed on the second substrate and not on the first substrate.

### Brief description of the drawings

The elements of the drawings are not necessarily to scale relative to each other. Like reference numerals designate corresponding similar parts. The features of the various illustrated examples can be combined unless they exclude each other and/or can be selectively omitted if not described to be necessarily required. Examples are depicted in the drawings and are exemplarily detailed in the description which follows.
Figure 1A is a schematic cross-sectional view of a conventional 2D (two-dimensional) surface ion trap device.
Figure 1B is a schematic cross-sectional view of an exemplary 3D (three-dimensional) ion trap device with spatial separation of DC and RF electrodes.
Figure 2A is a schematic cross-sectional view of an exemplary 3D ion trap device with spatial separation of DC and RF electrodes.
Figure 2B is a schematic top view on a first substrate of an exemplary 3D ion trap device with spatial separation of DC and RF electrodes.
Figure 3A is a top view of a 2D surface ion trap device used for simulations.
Figure 3B is a top view of a 2D surface ion trap device scaled in a lateral direction, used for simulations.
Figure 4A is a diagram illustrating simulation results of secular trap frequency in radial horizontal y direction, radial vertical z direction and axial x direction in units of MHz when scaling linear surface traps as shown in Figure 3B in terms of the number of DC electrode rows.
Figure 4B is a diagram illustrating simulation results of applied RF amplitude, maximum and minimum voltage at the DC electrodes in units of V when scaling linear surface traps as shown in Figure 3B in terms of the number of DC electrode rows.
Figure 4C is a diagram illustrating simulation results of trap depth in units of meV when scaling linear surface traps as shown in Figure 3B in terms of the number of DC electrode rows.
Figure 5A is a diagram illustrating simulation results of secular trap frequency in radial horizontal y direction, radial vertical z directions and axial x direction in units of MHz when scaling linear 3D ion traps with spatially separated DC and RF electrodes in terms of the number of DC electrode rows.
Figure 5B is a diagram illustrating simulation results of applied RF amplitude, maximum and minimum voltage at the DC electrodes in units of V when scaling linear 3D ion traps with spatially separated DC and RF electrodes in terms of the number of DC electrode rows.
Figure 5C is a diagram illustrating simulation results of trap depth in units of meV when scaling linear 3D ion traps with spatially separated DC and RF electrodes in terms of the number of DC electrode rows.
Figure 6 is a diagram illustrating the RF capacitance per ion for a surface trap design with a Si substrate, a surface trap design with a quartz substrate and an exemplary 3D trap design with spatially separated DC and RF electrodes.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, disposed, etc.) "indirectly on" or "indirectly under" the implied surface, with one or more additional parts, elements or layers being arranged between the implied surface and the part, element or material layer.

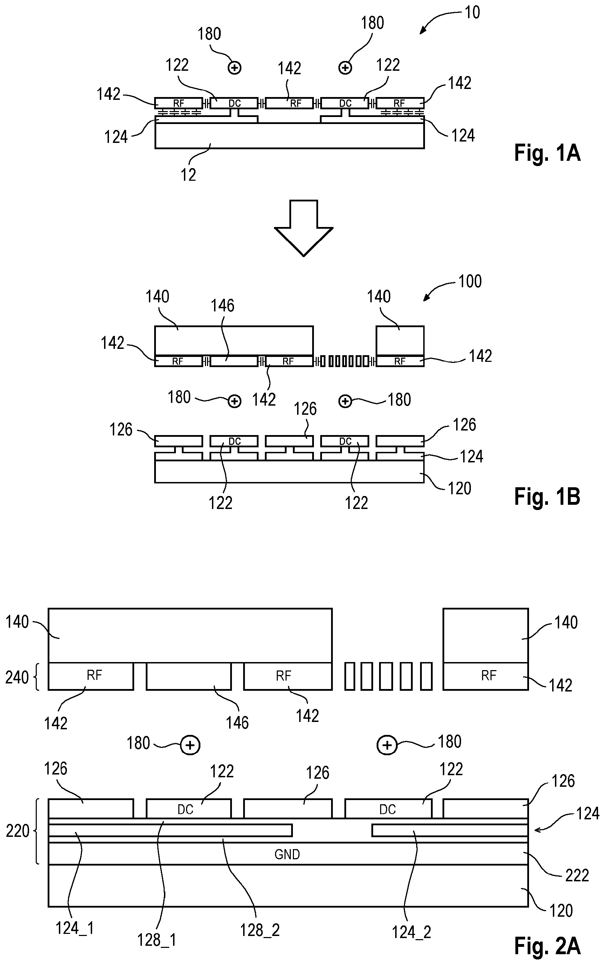

Figure 1A illustrates a schematic cross-sectional view of a conventional surface ion trap device 10. Surface ion traps are also referred to in the art as 2D (two-dimensional) ion traps. In surface ion trap devices 10 all ion trap electrodes (DC electrodes 122 and RF electrodes 142) are disposed in a lateral arrangement, e.g. in one plane. Typically, a sole substrate 12 is sufficient to carry both the DC electrodes 122 and the RF electrodes 142. In Figure 1A, electrically separated DC electrodes 122 and RF electrodes 142 are arranged next to each other in alternating order. In other examples, RF electrodes and DC electrodes are both arranged on each one of two substrates.

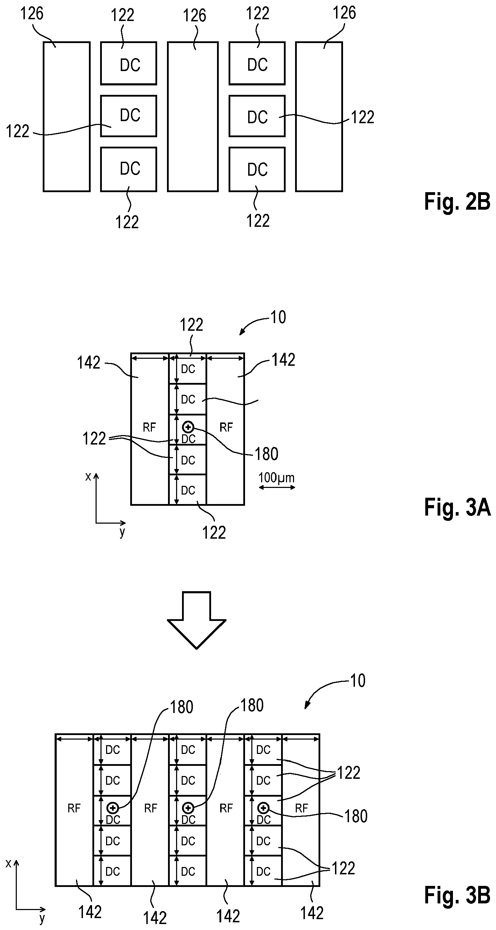

Typically, a surface ion trap device 10 for one ion 180 comprises a plurality of DC electrodes 122 arranged, e.g., in a row (see Figure 3A, in which, e.g., 5 DC electrodes 122 are arranged in a row) and two RF electrodes 142 sandwiching the row of DC electrodes 122. Hence, a scalable design of a surface ion trap device 10 for several hundred or thousand ions with individual control (see e.g. the scaled surface ion trap device 10 of Figure 3B) will require complex trap designs that include multiple RF electrodes 142 and very many DC electrodes 122.

Figure 1A further illustrates a structured routing layer 124 which is arranged beneath the structured electrode layer including the DC electrodes 122 and the RF electrodes 142. The routing layer 124 is configured to provide the electrical interconnect to the individual DC electrodes 122 and, e.g., the RF electrodes 142. The structured electrode layer may be the uppermost metal layer and the structured routing layer 124 may be implemented in a second structured metal layer and/or a third structured metal layer (not shown).

Figure 1A may also be interpreted as an elementary, repetitive building portion of a (scalable) surface multi-ion trap device 10 in which multiple ions 180 are trapped above their corresponding (rows of) DC electrodes 122 (see Figure 3A). The RF electrodes 142 in such scaled-up surface multi-ion trap device 10 must then be spaced very close to each other between the DC electrodes 122 for a suitable grid of ions. This required narrow spacing creates the following problems:

The coupling capacitance between RF electrodes 142 and adjacent DC electrodes 122 increases with increasing number of electrodes. This parasitic coupling capacitance, which is indicated by equivalent circuit capacitors in Figure 1A, produces an RF electrical field at the position of the ion 180 by crosstalk to the DC electrodes 122. This RF electrical field at the DC electrodes 122 enhances micromotion and heating of the ions 180 in an undesired manner.

Furthermore, in practice, high RF capacitances equal to or greater than 10-100 pF are caused by equivalent circuit capacitors between the RF electrodes 142 and DC metallization such as, e.g., the DC electrodes and the structured routing layer 124. Such RF capacitances may cause impractically large charging currents of more than 1 A, which heat up the ion trap device 10 due to ohmic losses.

Still further, the conventional electrode design of Figure 1A does not allow to compensate for any stray charges individually for each ion 180. Such stray charges can push the trapped ions 180 out of RF null and thus may cause heating of the ions by micromotion.

Figure 1B illustrates an example of a device 100 for controlling a trapped ion 180 which includes one or a plurality of 3D (three-dimensional) ion traps. For example, an elementary repetitive building portion of such scalable 3D ion trap device 100 including ion traps configured to trap two ions 180 is shown. The 3D ion trap device 100 provides a spatial separation of DC electrodes 122 and RF electrodes 142.

More specifically, the 3D ion trap device 100 includes a first substrate 120 and a second substrate 140. The second substrate 140 is spaced apart from the first substrate 120. The 3D ion trap device 100 includes at least one ion trap configured to trap an ion 180 in a space between the first substrate 120 and the second substrate 140.

DC electrodes 122 of the 3D ion trap device 100 are formed on the first substrate 120. RF electrodes 142 of the 3D ion trap device 100 are formed on the second substrate 140 and not on the first substrate 120.

Differently put, at least for one ion trap, all DC electrodes 122 and all RF electrodes 142 for this ion trap are separated in the vertical direction. The ion 180 is trapped in between the DC electrodes 122 and the RF electrodes 142. This spatial separation of DC electrodes 122 and RF electrodes 142 greatly reduces the parasitic capacitances between the RF electrodes 142 and the DC electrodes 122. Typically, parasitic capacitances are reduced by a factor of 100-1000 compared to surface ion trap device 10 for an equal number of trapped ions.

Furthermore, the possible integration density is increased compared to the surface ion trap design of Figure 1A, since a part of the electrodes (namely the RF electrodes 142) are removed from the first substrate 120. These RF electrodes 142 may be formed as stripe-shaped RF electrodes arranged in parallel to each other on the second substrate 140.

For example, the DC electrodes 122 are arranged in a row similar as shown in Figures 3A. The row of DC electrodes 122 may be located between the at least two stripe-shaped RF electrodes 142 arranged on the second substrate 140 in a vertical projection. The row of DC electrode 122 may thus be parallel with the at least two stripe-shaped RF electrodes 142.

The position of the ion 180 is, for example, exactly in the middle between the two RF electrodes 142 (in a vertical projection). Below the middle between the two RF electrodes 142, the DC electrodes 122 (e.g. arranged in a row, compare Figure 3A) are arranged and cause the confinement of the ion 180 in the axial direction.

As the DC electrodes 122 and the RF electrodes 142 are arranged on different planes, i.e. separated in the vertical direction, the crosstalk between the RF electrodes 142 and the DC electrodes 122 is greatly reduced. Further, the overall RF capacitance of the 3D ion trap device 100 can be significantly reduced. As mentioned above, the ions 180 are trapped between these different planes.

The 3D ion trap device 100 may include one or more compensation electrodes 126 arranged alongside a row of DC electrodes 122 on the first substrate 120. The compensation electrodes 126 arranged between the DC electrodes 122 are useful to compensate for stray fields due to, e.g., stray charges individually for each ion. Uncompensated stray fields can push the trapped ions out of RF null and thus cause heating of the ions by micromotion. The compensation electrodes 126 are referred to as shim electrodes 126 in the following. For example, one shim electrode 126 is used per ion trap.

The shim electrodes 126 are DC electrodes. They are individually controllable with a DC voltage. In a scalable 3D ion trap device 100, the shim electrodes 126 and (rows of) DC electrodes 122 may be arranged in alternating order. It is to be noted that in conventional ion traps, ion trap scaling creates the problem that the space for such compensation electrodes (shim electrodes) may be lacking.

Figure 2B illustrates a top view of an electrode structure on substrate 120. Figure 2B may, e.g., show an example of the electrode structure on substrate 120 of the 3D ion trap device 100 of Figure 1B. An ion trap may, e.g., contain three DC electrodes 122. This row of DC electrodes 122 may be arranged between two shim electrodes 126. In a vertical projection the shim electrodes 126 may be placed directly below the RF electrodes 142 arranged on the second substrate 140.

Biased ground electrodes 146 may, e.g., be arranged between the stripe-shaped RF electrodes 142 on the second substrate 140. The biased ground electrodes 146 are - just like the shim electrodes 126 - DC electrodes. They may be driven by a small positive DC voltage which may, e.g., be constant in time. This voltage can be identical for all biased ground electrodes 146 on the second substrate 140, i.e. for biased ground electrodes 146 of different ion traps.

In other words, the stripe-shaped RF electrodes 142 and the biased ground electrodes 146 may be on one substrate (here: the second substrate 140) while the DC electrodes 122 may be on the other substrate (here: the first substrate 120).

Differently stated, one substrate (here: the first substrate 120) generates the axial ion confinement (by means of the structured DC electrodes 122), while the other substrate (here: the second substrate 140) provides the radial ion confinement (by means of the stripe-shaped RF electrodes 142 and the biased ground electrodes 146).

As indicated in Figure 1B by equivalent circuit capacitors, there is a parasitic coupling between the RF electrodes 142 and the biased ground electrodes 146. However, different than the parasitic coupling between RF electrodes 142 and (individually driven) DC electrodes 122 of Figure 1A, this parasitic coupling can be compensated with suitable filters and therefore does not enhance micromotion and heating of the ions 180.

Referring to Figure 2A, a first metal layer structure 220 is formed on the first substrate 120. The first metal layer structure 220 comprises an upper metal layer and may comprise one or a plurality of lower metal layers. DC electrodes 122 and, optionally, shim electrodes 126 are formed in the upper metal layer. Conductor lines 124_1, 124_2 connecting to the DC electrodes 122 and, optionally, to the shim electrodes 126 are formed in the next lower metal layer(s). This or these next lower metal layer(s) may correspond to the routing layer 124 shown in Figure 1B.

Further, a ground layer 222 may form part of the first metal layer structure 220. The ground layer 222 may be a metal layer arranged on the substrate 120 or may, alternatively, be formed by a highly conductive surface region of the first substrate 120 (e.g. by a degenerated silicon surface region of a silicon substrate 120). The ground layer 222 may be a continuous layer and may serve as a shielding layer.

As apparent from Figure 2A, the first metal layer structure 220 may provide relatively high capacitances between each of the DC electrodes 122 and between the DC electrodes 122 and the ground layer 222. However, these relatively high capacitances can be taken into account or neglected when operating the 3D ion trap device 100. The problematic capacitive couplings between RF electrodes 142 and DC electrodes 122 are greatly reduced or can even be neglected by means of the separation of the first and second substrate 120, 140 and thus the separation of the DC electrodes 122 and RF electrodes 124. In this context, the second substrate 140 may also be referred to as an "RF wafer", while the first substrate 120 may be referred to as a "DC wafer".

Insulating layers 128_1, 128_2 may be provided in the first metal layer structure 220 between the upper metal layer (e.g. DC electrodes 122 and e.g. shim electrodes 126), the lower metal layer(s) (e.g. conductor lines 124_1, 124_2) and, e.g., the ground layer 222. Through connections (not shown) between the upper metal layer and the lower metal layer(s) may be implemented by vias. The insulating layers 128_1, 128_2 may, e.g., be of a silicon oxide or silicon nitride material. They may be formed by micro-fabrication, e.g. by plasma-CVD (chemical vapor deposition) or, e.g., by thermal decomposition of tetraethyl orthosilicate (TEOS) .

The first metal layer structure 220 may be formed by micro-fabrication techniques. Generally, micro-fabrication techniques for electrode formation and structuring may, e.g., involve photolithography methods (e.g. including photoresist application, patterning, etching) and/or deposition techniques (e.g. chemical vapor deposition (CVD), physical vapor deposition (PVD), sputtering) and/or plating techniques (e.g. electroless plating, galvanic plating).

A second metal layer structure 240 may be formed on the second substrate 140. The second metal structure 240 may, e.g., also be a multi-layer metal structure similar as the first metal layer structure 220. However, in some examples, the second metal layer structure 240 may be implemented as a single structured metal layer, wherein the RF electrodes 142 and, e.g., the biased ground electrodes 146 (if present) are formed in this single structured metal layer. A single structured metal layer can be used because the RF electrodes 142 may require only two leads, i.e. all the RF electrodes 142 may be alternately driven with two different RF voltages. Further, the biased ground electrodes 146 (if present) may all be driven by the same small positive DC voltage. Hence, the second substrate 140 of a 3D ion trap device 100 (e.g. including hundreds of ion traps) may only need to be contacted by three electrical terminals for driving the second metal layer structure 240 as illustrated in Figure 2A.

The first semiconductor substrate 120 may, e.g., be a printed circuit board or a semiconductor substrate, e.g. Si substrate. Such substrates are suitable for micro-mechanical processing such as, e.g., metal layer structuring, vias formation, insulating layer formation, etc. to provide for complex DC electrodes 122 and routing layers 124. If the first substrate 120 is a semiconductor wafer, standard CMOS (complementary metal-oxide semiconductor) processes may be used to form the complex structures of DC electrodes 122, shim electrodes 126 and conductor lines 124_1, 124_2.

The second substrate 140 may, e.g., be a glass substrate, a fused silica substrate or a sapphire substrate. These substrates are particularly suited to carry the RF electrodes 142 of the device 100 due to the smaller RF loss angle compared to, e.g., silicon substrates. However, in general, the second substrate 140 may be of any kind, and may, e.g., also be a semiconductor substrate or a PCB (printed circuit board).

Differently stated, one substrate (here: the first substrate 120) may be a multi metal layer substrate containing the DC electrodes 122 and DC wiring (routing layers 124) while the other substrate (here: the second substrate 140) may either be a single metal layer substrate or a multi metal layer substrate implementing the stripe-shaped RF electrodes 142 and the biased ground electrodes 146.

The first and second substrates 120, 140 may, e.g., be formed by wafers which may have been processed by micro-fabrication techniques. The spacing between the substrates 120, 140 may be defined by a spacer comprising, e.g., spacer elements or a structured spacer wafer (not shown), which is disposed between the first substrate 120 and the second substrate 140. The spacer elements or the structured spacer wafer (not shown) can be wafer-bonded to the first and second substrates 120, 140. In other words, the first and second substrates 120, 140 may be fixed to each other by means of spacer elements or a structured spacer wafer (not shown) wafer-bonded at opposite main surfaces to the first and second substrates 120, 140. The spacer elements or the structured spacer wafer may, e.g., be made of glass, fused silica, sapphire, a semiconductor material, e.g. Si, or of metal or a printed circuit board (PCB).

It is also possible for one substrate (e.g., the first substrate 120) to be a wafer and the other substrate (e.g., the second substrate 140) to be not a wafer (but rather, for example, a discrete chip or substrate plate). The RF electrodes 142 of the ion trap are disposed over the spacer (spacer elements or structured spacer wafer) on such a non-wafer second substrate 140.

One or the plurality of ion traps of the 3D ion trap device 100 may be configured such that a position of the trapped ion 180 in an axial dimension (i.e. along the row of DC electrodes 122) is controlled by a DC potential applied to the DC electrodes 122 associated with the corresponding ion trap.

Further, one or a plurality of ion traps of the 3D ion trap device 100 may be configured such that a position of the trapped ion 180 in a radial dimension is controlled by an RF potential applied to the RF electrodes 142 which belong to the respective ion trap.

The 3D ion trap device 100 with separated RF and DC electrodes 142, 122 combines the advantages of surface traps (Figure 1A), i.e. low complexity and hence scalability, with the advantages of conventional 3D trap architecture, i.e. high confinement potential. Further, the trap performance of the 3D ion trap device 100 disclosed herein is not limited by the need to omit compensation electrodes for insufficient available space and/or by excessive parasitic capacitances between RF electrodes and DC electrodes. This allows to obtain a highly scalable ion trap design with the capability for ion shuttling operations.

A spacing between the DC electrodes 122 and the RF electrodes 142 may, e.g., be in a range between 100 µm and 400 µm, or 200 µm or 300 µm. As mentioned before, this spacing may be implemented by a spacer (e.g. formed of a plurality of spacer elements or a structured spacer wafer) disposed between the first substrate 120 and the second substrate 140 and configured to hold these substrates 120, 140 in a mechanically stable and precisely defined positional relationship.

Figure 3A illustrates a top view on a surface ion trap device 10 as illustrated e.g. in Figure 1A. The DC electrodes 122 are, in this example, formed by squares with edge length of 100 µm. Five DC electrodes 122 in a row are used for one ion trap. The row of DC electrodes 122 is laterally surrounded by two continuous RF electrodes 142 each having, e.g., a width of 100 µm. The entire remaining surface is grounded. The ion 180 is held above the center DC electrode 122.

Figure 3B illustrates scaling the surface ion trap 10 of Figure 3A up to a surface ion trap 10 including three adjacent ion traps. In this example, the scaling is only performed in one lateral direction, i.e. in Figure 3B in the horizontal y direction. X is the axial direction of the linear surface ion traps.

Simulation computations of scaling a surface ion trap device 10 (compare Figures 3A and 3B) and of scaling a 3D ion trap device 100 (as shown in Figures 1B and 2A) have been performed in order to compute and compare characteristic quantities of these ion trap devices 10, 100. Scaling is performed in terms of N, wherein N denotes the number of DC electrode rows (which equals the number of linear ion traps).

In view of the 3D ion trap device 100, the same geometry of DC electrodes 122 and RF electrodes 142 as shown in Figures 3A and 3B were used. In other words, Figures 3A and 3B could also be interpreted to show the DC and RF electrode pattern of the 3D ion trap device 100 in a vertical projection.

Hence, as shown in Figure 3B, a bar pattern of spaced apart stripe-shaped RF electrodes 142 arranged in parallel to each other may be formed on the second substrate 100. Further, a bar pattern of rows of DC electrodes 122 may be formed on the first substrate 120, wherein each row of DC electrodes 122 is located between two stripe-shaped RF electrodes 142 in a vertical projection. Furthermore, a bar pattern of biased ground electrodes 146 alternately interleaved with the bar pattern of spaced apart strip-shaped RF electrodes 142 may be formed on the second substrate 140, wherein the biased ground electrodes 146 being electrically connected to each other so as to be at a same potential. A row of DC electrodes 122 is also referred to as a DC rail in the following.

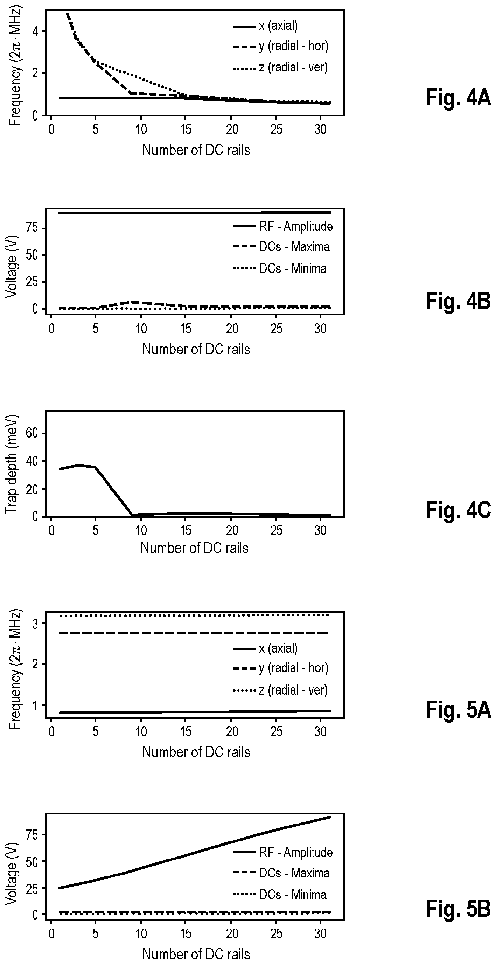

The characteristic quantities derived by simulation were secular trap frequency in 2π×MHz, used DC and RF voltages in V and trap depth, i.e. trap confinement energy, in meV. Figures 4A to 4C illustrate the simulation results obtained for these quantities for the surface ion trap device 10 by varying the number N of adjacent linear ion traps (i.e. the number of DC rails). For stable operation of a quantum computer, radial secular trap frequencies (y and z directions) of 2π×3 MHz, axial (x) secular trap frequency of approximately of 2π×1 MHz, and a trap depth of at least 20 meV are required.

Figure 4A shows that the secular trap frequencies in radial horizontal y direction, radial vertical z direction and axial x direction decrease as the number N of traps increases. Similarly the trap depth (see Figure 4C) decreases with increasing number N of traps. From about seven traps placed side by side, these parameters are so low that the ions can no longer be stored and used as qubit.

As shown in Figure 4B, the simulations were performed at constant RF (maximum) amplitude voltage. It would be possible to counteract the drop in secular trap frequency and the drop in trap depth by raising the RF amplitude voltage. However, it would be necessary to increase the RF amplitude voltage to values above 300 V, for example up to 400 V. This is not feasible, since a breakdown already occurs at this point. That is, the drop in secular trap frequency and the drop in trap depth can, in practice, not be compensated by increasing the RF amplitude voltage.

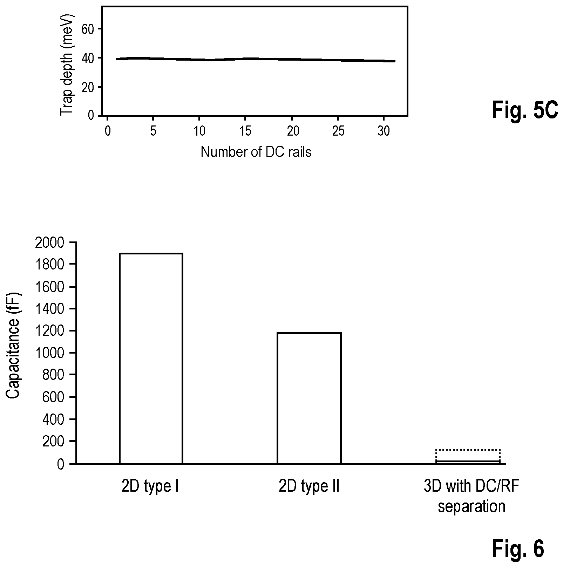

Referring to Figures 5A to 5C, the same quantities were computed by simulation for the 3D ion trap device 100 with identical electrode sizes and 200 µm vertical spacing between the RF electrodes 142 and the DC electrodes 122. Further, compensation electrodes (shim electrodes 126) were implemented on the first substrate 120 and biased ground electrodes 146, held at the same biased ground potential, were implemented on the second substrate 140, see Figures 1B and 2A. With appropriate DC voltages and moderate RF amplitude voltages (of about 80 V amplitude), secular trap frequencies (see Figure 5A) and trap depth (see Figure 5C) are obtained that are suitable for at least N = 30 juxtaposed ion traps. In these simulations a relatively low but sufficient trap depth of greater than 35 meV was still obtained. This limitation is mainly due to the 2D array architecture, so that in the axial direction local minima limit the trap depth.

Furthermore, the RF capacitance of 2D surface ion trap device 10 and a 3D ion trap device 100 where computed by simulation. An initial simulation was performed for ion trap devices 10 and 100, each containing two traps (N = 2) arranged side by side, as shown in Figure 1A and Figure 1B, respectively. Both traps can store up to 18 ions.

A type I surface ion trap device 10 used silicon as substrate 12 and a continuous metal ground layer 222 (see Figure 2A) for shielding the silicon substrate 12. A type II surface ion trap device 10 used a substrate 12 made of quartz, and the lowest metal ground layer 222 was dispensed. The 3D ion trap device 100 with separated DC and RF electrodes (see Figure 1B) used a second substrate 140 made of quartz. The spacing between the RF electrodes 142 and the DC electrodes 122 was 200 µm.

An RF capacitance value of 34.4 pF was computed for the type I surface ion trap device 10. For the type II surface ion trap device 10, the RF capacitance could be lowered to 22.2 pF. These values correspond to an RF capacitance of 1.9 pF per ion for the type I surface ion trap device 10 and of 1.2 pF per ion for the type II surface ion trap device 10. For the 3D ion trap device 100 with spatially separated DC and RF electrodes, an RF capacitance of 20-100 fF per ion was obtained, see Table 1.

The second row of Table 1 indicates the RF capacitances of the type I and type II surface ion trap devices 10 and the 3D ion trap device 100 for 1000 ions.

**Table 1: Comparison of the RF capacitance of different ion trap designs**

| | RF capacitance of type I surface ion trap on shielded Si substrate | RF capacitance of type II surface ion trap on quartz substrate | RF capacitance of 3D ion trap with spatially separated DC/RF electrodes and DC/RF lines |
|---|---|---|---|
| Per ion | ∼1.9pF | ∼1.2pF | 20-100fF |
| 1000 ions | ∼1.9nF | ∼1.2nF | 20-100pF |

The scaled-up RF capacitance values of Table 1 are also shown in Figure 6. The RF capacitance values for 1000 ions of type I and type II surface ion trap devices 10 are too high for allowing to scale these 2D ion traps to high numbers of trapped ions. On the other hand, for a 3D ion trap device 100, the RF capacitance of 20-100 pF for 1000 ions allows the implementation of a scaled-up ion trap device 100 with realistic parameters, in particular in terms of the required RF electrode charging currents.

### EXAMPLES

The following examples pertain to further aspects of the disclosure:
Example 1 is a device for controlling trapped ions, the device comprising: a first substrate; a second substrate spaced apart from the first substrate; at least one ion trap configured to trap an ion in a space between the first substrate and the second substrate, wherein DC electrodes of the ion trap are formed on the first substrate; and RF electrodes of the ion trap are formed on the second substrate and not on the first substrate.
In Example 2, the subject matter of Example 1 can optionally include wherein the DC electrodes of the ion trap are not formed on the second substrate.
In Example 3, the subject matter of Example 2 can optionally include wherein at least two stripe-shaped RF electrodes arranged in parallel to each other are formed on the second substrate.
In Example 4, the subject matter of Example 3 can optionally include wherein the DC electrodes are arranged in a row which is located between the at least two stripe-shaped RF electrodes in a vertical projection.
In Example 5, the subject matter of Example 4 can optionally include wherein at least one shim electrode arranged alongside the row of DC electrodes is formed on the first substrate.
In Example 6, the subject matter of any of Examples 3 to 5 can optionally include wherein a biased ground electrode arranged between the two stripe-shaped RF electrodes is formed on the second substrate.
In Example 7, the subject matter of any preceding Example can optionally include wherein a spacing between the DC electrodes and the RF electrodes is in a range between 100 µm and 400 µm or 200 µm and 300 µm.
In Example 8, the subject matter of any preceding Example can optionally include wherein a first metal layer structure formed on the first substrate comprises an upper metal layer and a lower metal layer, wherein the DC electrodes are formed in the upper metal layer and conductor lines connecting to the DC electrodes are formed in the lower metal layer.
In Example 9, the subject matter of any preceding Example can optionally include wherein a second metal layer structure formed on the second substrate is implemented by a single structured metal layer, wherein the RF electrodes are formed in the single structured metal layer.
In Example 10, the subject matter of any preceding Example can optionally include wherein the first substrate is a semiconductor substrate or a printed circuit board.
In Example 11, the subject matter of any preceding Example can optionally include wherein the second substrate is a glass substrate or a sapphire substrate or a fused silica substrate.
In Example 12, the subject matter of any preceding Example can optionally include wherein the ion trap is configured such that a position of the trapped ion in an axial dimension is controlled by a DC potential applied to the DC electrodes.
In Example 13, the subject matter of any preceding Example can optionally include wherein the ion trap is configured such that a position of the trapped ion in a radial dimension is controlled by an RF potential applied to the RF electrodes.
In Example 14, the subject matter of any preceding Example can optionally further include a plurality of ion traps configured to trap a plurality of ions in the space between the first substrate and the second substrate, wherein the DC electrodes of each ion trap are formed on the first substrate; and the RF electrodes of each ion trap are formed on the second substrate and not on the first substrate.
In Example 15, the subject matter of Example 14 can optionally include wherein a bar pattern of spaced apart stripe-shaped RF electrodes arranged in parallel to each other is formed on the second substrate.
In Example 16, the subject matter of Example 14 or 15 can optionally include wherein a bar pattern of rows of DC electrodes is formed on the first substrate, wherein each row of DC electrodes is located between two stripe-shaped RF electrodes in a vertical projection.
In Example 17, the subject matter of any of Example 15 or 16 can optionally include wherein a bar pattern of biased ground electrodes alternately interleaved with the bar pattern of spaced apart strip-shaped RF electrodes is formed on the second substrate, wherein the biased ground electrodes being electrically connected to each other so as to be at a same potential.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling a trapped ion, the device comprising:
a first substrate;
a second substrate spaced apart from the first substrate;
at least one ion trap configured to trap an ion in a space between the first substrate and the second substrate, wherein
DC electrodes of the ion trap are formed on the first substrate; and
RF electrodes of the ion trap are formed on the second substrate and not on the first substrate.

2. The device of claim 1, wherein the DC electrodes of the ion trap are not formed on the second substrate.

3. The device of claim 1 or 2, wherein at least two stripe-shaped RF electrodes arranged in parallel to each other are formed on the second substrate.

4. The device of claim 3, wherein the DC electrodes are arranged in a row which is located between the at least two stripe-shaped RF electrodes in a vertical projection.

5. The device of claim 4, wherein at least one shim electrode arranged alongside the row of DC electrodes is formed on the first substrate.

6. The device of any of claims 3 to 5, wherein a biased ground electrode arranged between the two stripe-shaped RF electrodes is formed on the second substrate.

7. The device of any of the preceding claims, wherein a spacing between the DC electrodes and the RF electrodes is in a range between 100 µm and 400 µm or 200 µm and 300 µm.

8. The device of any of the preceding claims, wherein a first metal layer structure formed on the first substrate comprises an upper metal layer and a lower metal layer, wherein the DC electrodes are formed in the upper metal layer and conductor lines connecting to the DC electrodes are formed in the lower metal layer.

9. The device of any of the preceding claims, wherein a second metal layer structure formed on the second substrate is implemented by a single structured metal layer, wherein the RF electrodes are formed in the single structured metal layer.

10. The device of any of the preceding claims, wherein the first substrate is a semiconductor substrate or a printed circuit board.

11. The device of any of the preceding claims, wherein the second substrate is a glass substrate or a sapphire substrate or a fused silica substrate.

12. The device of any of the preceding claims, wherein the ion trap is configured such that a position of the trapped ion in an axial dimension is controlled by a DC potential applied to the DC electrodes.

13. The device of any of the preceding claims, wherein the ion trap is configured such that a position of the trapped ion in a radial dimension is controlled by an RF potential applied to the RF electrodes.

14. The device of any of the preceding claims, the device comprising:
a plurality of ion traps configured to trap a plurality of ions in the space between the first substrate and the second substrate, wherein
the DC electrodes of each ion trap are formed on the first substrate; and
the RF electrodes of each ion trap are formed on the second substrate and not on the first substrate.

15. The device of claim 14, wherein a bar pattern of spaced apart stripe-shaped RF electrodes arranged in parallel to each other is formed on the second substrate.

16. The device of claim 14 or 15, wherein a bar pattern of rows of DC electrodes is formed on the first substrate, wherein each row of DC electrodes is located between two stripe-shaped RF electrodes in a vertical projection.

17. The device of claims 15 or 16, wherein a bar pattern of biased ground electrodes alternately interleaved with the bar pattern of spaced apart strip-shaped RF electrodes is formed on the second substrate, wherein the biased ground electrodes being electrically connected to each other so as to be at a same potential.
